# EUROPÄISCHE PATENTANMELDUNG

(11) **EP 0 813 995 A2**
(43) Veröffentlichungstag der Anmeldung: **29.12.1997**
(21) Anmeldenummer: 97110166.2
(22) Anmeldetag: 21.06.1997
(51) Int. Cl.: B60Q 1/30, B60Q 11/00

(54) **Schaltungsanordnung zur Verbindung der Blinklichtanlage eines Fahrzeuganhängers mit der Blinklichtanlage eines Zugfahrzeuges**

(30) Priorität: 21.06.1996 DE 19624755
(71) Anmelder: Gneiting, Werner, 72636 Frickenhausen (DE)
(72) Erfinder: Gneiting, Werner, 72636 Frickenhausen (DE)
(74) Vertreter: Möbus, Rudolf, Dipl.-Ing.

(57) **Zusammenfassung**

Eine Schaltungsanordnung zur Verbindung der Blinklichtanlage eines Fahrzeuganhängers mit der Blinklichtanlage eines Zugfahrzeuges, wobei die Blinklichtanlage des Zugfahrzeuges einen Blinktaktgeber (10) aufweist, der den Ausfall einer Blinkleuchte des Zugfahrzeuges (L1, L2) erkennt und anzeigt, und wobei die Schaltungsanordnung die Blinkleuchten (LA) des Anhängers über hochohmige Treiberschaltungen (T1, R1, R2) mit dem Blinktaktgeber des Zugfahrzeuges (10) verbindet und einen Ausfall einer der Blinkleuchten (LA) des Anhängers erkennt und anzeigt, und wobei sie Schalteinrichtungen (RE3, S3) aufweist, die bei Ausfall einer der Anhängerblinkleuchten (LA) eine der Zugfahrzeugblinkleuchten (L2) zeitverzögert zu der oder den anderen Zugfahrzeugblinkleuchten (L1) der gleichen Fahrtrichtung zuschaltet.

## Beschreibung

Die Erfindung betrifft eine Schaltungsanordnung zur Verbindung der Blinklichtanlage eines Fahrzeuganhängers mit der Blinklichtanlage eines Zugfahrzeuges, wobei die Blinklichtanlage des Zugfahrzeuges einen Blinktaktgeber aufweist, der den Ausfall einer Blinkleuchte des Zugfahrzeuges erkennt und anzeigt, und wobei die Schaltungsanordnung die Blinkleuchten des Anhängers über hochohmige Treiberschaltungen mit dem Blinktaktgeber des Zugfahrzeuges verbindet und einen Ausfall einer der Blinkleuchten des Anhängers erkennt und anzeigt.

Bei der Nachrüstung von Fahrzeugen für Anhängerbetrieb müssen neben den Blinkleuchten des Zugfahrzeuges auch die Blinkleuchten des Anhängers angesteuert und überwacht werden. Die Blinktaktgeber eines Fahrzeuges sind in der Regel nur zum Betrieb und zur Überwachung von zwei Blinkleuchten je Fahrtrichtung ausgelegt. Falls eine der Blinkleuchten des Zugfahrzeuges ausfällt, wird dies durch den Blinktaktgeber in der Regel durch eine erhöhte Taktfrequenz sowohl akustisch als auch mittels einer Kontrolleuchte am Armaturenbrett angezeigt. Soll das Fahrzeug nun für Anhängebetrieb nachgerüstet werden, so besteht zum einen die Möglichkeit, den Blinktaktgeber des Zugfahrzeuges durch einen Blinktaktgeber zu ersetzen, der in der Lage ist, mindestens drei Blinkleuchten je Fahrtrichtung zu betreiben und zu überwachen. Das Auswechseln des Blinktaktgebers ist jedoch mit einem erheblichem Montageaufwand verbunden. Darüber hinaus ist in der Regel das Anbringen einer zweiten Kontrolleuchte am Armaturenbrett erforderlich. Das Anbringen einer solchen zusätzlichen Kontrolleuchte ist nicht nur umständlich sondern beeinträchtigt auch das optische Erscheinungsbild des Cockpits und wird daher von Fahrzeugeignern häufig abgelehnt.

Eine andere, in der DE 40 10 765 beschriebene Lösung besteht darin, die Blinkleuchten des Anhängers über hochohmige Treiberschaltungen vom unveränderten Blinktaktgeber des Zugfahrzeuges ansteuern zu lassen. Durch die hochohmigen Treiberschaltungen wird der Blinktaktgeber durch die zusätzlichen Blinkleuchten des Fahrzeuganhängers nicht belastet. Die Blinkleuchten des Anhängers müssen jedoch auch überwacht werden, so daß ein Ausfall einer der Blinkleuchten zuverlässig angezeigt wird. Hierzu wird in der DE 40 10 765 vorgeschlagen, bei Ausfall einer Anhängerblinkleuchte eine der Blinkleuchten des Zugfahrzeuges vom Blinktaktgeber abzutrennen und über eine getrennte Spannungsversorgung zu betreiben. Hierdurch wird für den Blinktaktgeber der Ausfall einer Blinkleuchte des Zugfahrzeuges simuliert, worauf dieser ein entsprechendes Fehlersignal abgibt. Da die Blinkleuchte aber tatsächlich intakt ist, kann sie über die getrennte Spannungsversorgung weiterbetrieben werden. Weiterhin weist die bekannte Schaltung eine Anhängererkennungseinrichtung auf, die bei elektrisch angeschlossenem Anhänger ein entsprechendes Ausgangssignal erzeugt, das von der Fehlererkennungsschaltung für die Blinkleuchten des Anhängers ausgewertet wird. Nur bei korrekt angeschlossenem Anhänger wird bei Ausfall einer Anhängerleuchte eine der Blinkleuchten des Zugfahrzeuges vom Blinktaktgeber abgekoppelt. Bei nicht angeschlossenem Anhänger wird die Hilfsschalteinrichtung zur Abtrennung der Zugfahrzeugblinkleuchte vom Blinktaktgeber deaktiviert.

Die bekannte Schaltungseinrichtung vermeidet zwar den Nachteil des Einbaus eines neuen Blinktaktgebers, ist jedoch schaltungstechnisch relativ aufwendig, da sie verschiedene Signalauswertungen zum korrekten Betrieb der Blinklichtanlagen von Zugfahrzeug und Anhänger durchführen muß.

Der vorliegenden Erfindung liegt die Aufgabe zugrunde, eine Schaltungsanordnung zu schaffen, die schaltungstechnisch einfach und leicht montierbar ist, um insbesondere eine Nachrüstung von Fahrzeugen mit einer solchen Schaltungsanordnung preiswert und problemlos zu gestalten.

Die Aufgabe wird mit einer Schaltungsanordnung der eingangs genannten Art erfindungsgemäß dadurch gelöst, daß sie Schalteinrichtungen aufweist, die bei Ausfall einer der Anhängerblinkleuchten eine der Zugfahrzeugblinkleuchten zeitverzögert zu der oder den anderen Zugfahrzeugblinkleuchten der gleichen Fahrtrichtung zuschaltet.

Bei Ausfall einer Anhängerblinkleuchte wird durch das zeitverzögerte Zuschalten einer der Zugfahrzeugblinkleuchten der Blinktaktgeber kurzzeitig nur mit halber Last betrieben, wodurch dieser ein Fehlersignal auslöst. Je nach Ausgestaltung der Fehlererkennungseinrichtung kann dabei das Fehlersignal zwar unterbrochen werden, sobald die zweite Zugfahrzeugblinkleuchte zugeschaltet wird, doch wird bei jedem weiteren Blinktakt erneut ein Fehlersignal ausgelöst, da der Blinktaktgeber kurzzeitig wieder nur halb belastet wird. Somit ist eine zuverlässige Fehleranzeige bei Ausfall einer Anhängerblinkleuchte gegeben, die schaltungstechnisch einfach durch Zwischenschalten eines Zeitgliedes in den Strompfad zwischen Blinktaktgeber und einer, vorzugsweise der hinteren Zugfahrzeugblinkleuchte, realisierbar ist. Die Schaltungsanordnung kann zweckmäßigerweise ebenfalls eine Anhängererkennungseinrichtung aufweisen. Eine besonders einfache Realisierungsmöglichkeit hierfür ist die Ausgestaltung einer Anhängererkennungseinrichtung in Form einer Masseverbindung der Schaltungsanordnung über eine vorgeschriebene Kurzschlußbrücke zwischen zwei Polen des Anhängersteckers. Bei elektrisch nicht angeschlossenem Anhänger hat die Schaltungsanordnung keinen Masseanschluß, ist also außer Betrieb. Wird ein Anhänger elektrisch angeschlossen, so erhält die Schaltungsanordnung die notwendige Masseverbindung und wird aktiviert. Hier sind also keine aufwendigen Erkennungsschaltungen notwendig, die bei angeschlossenem Anhänger ein entsprechendes Ausgangssignal abgeben. Bei einer solchen Ausgestaltung der Anhängererkennungseinrichtung sind somit auch keinerlei Signalauswerteeinrichtungen in der Schaltungsanordnung erforderlich. Selbstverständlich ist jedoch auch eine Anhängererkennung auf andere Weise, beispielsweise anhand der über die Lampen des Hängers zur Verfügung stehende Masse, möglich. Zur Überwachung der Blinkleuchten des Anhängers kann die Schaltungsanordnung eine Fehlererkennungseinrichtung aufweisen, die den Stromfluß durch die Blinkleuchten des Anhängers überwacht. Hierfür kann beispielsweise ein Reed-Kontakt eingesetzt werden.

Bei einer bevorzugten Ausgestaltung kann die Schaltungsanordnung je Fahrtrichtung ein Relais mit einem Schalter aufweisen, der in seiner Ruhestellung bei elektrisch nicht angeschlossenem Anhänger die zeitverzögert zuschaltbare Zugfahrzeugblinkleuchte direkt mit dem Blinktaktgeber verbindet. Selbstverständlich könnte anstelle eines Relais auch ein anderes Schaltelement eingesetzt werden, doch zeichnen sich Relais durch hohe Zuverlässigkeit und eine hohe Lebensdauer aus. Vorteilhafterweise kann die Schaltungsanordnung außerdem je Fahrtrichtung ein Relais mit einem Schalter aufweisen, der in seiner Betriebsstellung die Anhängerblinkleuchte mit der Batteriespannung verbindet. Dieses Relais kann über eine hochohmige Treiberschaltung vom Blinktaktgeber angesteuert werden.

Weiterhin kann die Schaltungsanordnung je Fahrtrichtung ein Relais mit einem Umschalter aufweisen, der den Blinktaktgeber in seiner Ruhestellung und in seiner Betriebsstellung direkt mit der zeitverzögert zuschaltbaren Zugfahrzeugblinkleuchte verbindet, wobei das Relais von der Fehlererkennungseinrichtung für die Anhängerblinkleuchte angesteuert wird. Kommt es zum Ausfall einer Anhängerblinkleuchte, so wird durch ein Abfallen dieses Relais die zeitverzögerte Zuschaltung einer der Zugfahrzeugblinkleuchten bewirkt.

Zur Fehleranzeige kann der Blinktaktgeber in an sich bekannter Weise zusätzlich eine Kontrolleuchte am Armaturenbrett des Zugfahrzeuges ansteuern. Dabei kann der Blinktaktgeber mindestens diese Kontrolleuchte bei Ausfall einer der Blinkleuchten des Wagenzuges mit einer veränderten Taktfrequenz ansteuern. Der Einbau einer zusätzlichen Kontrolleuchte ist nicht notwendig.

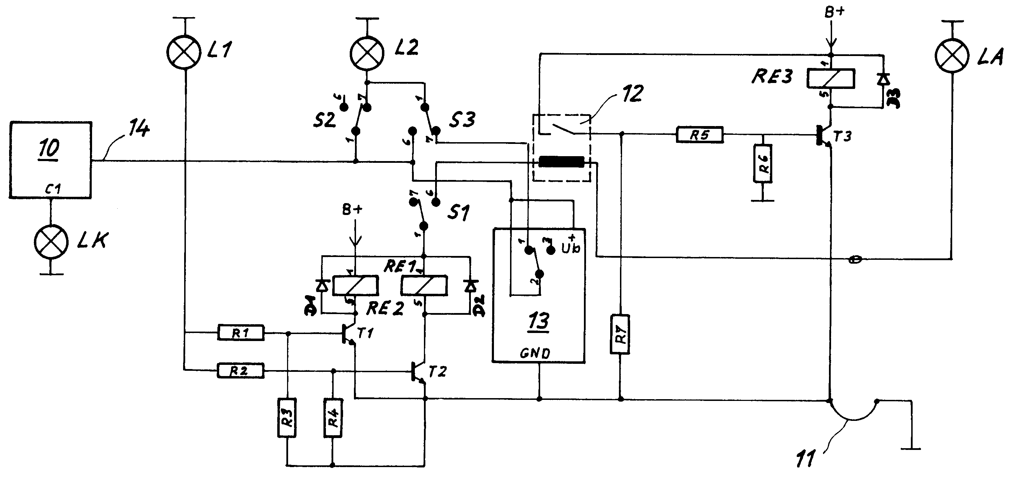

Nachfolgend wird ein bevorzugtes Ausführungsbeispiel einer erfindungsgemäßen Schaltungsanordnung anhand der Zeichnung näher erläutert.

Die einzige Figur zeigt einen Schaltplan einer Blinklichtanlage zur Ansteuerung von Blinkleuchten L1 und L2 eines Zugfahrzeuges sowie einer Blinkleuchte LA eines Anhängers in einer Fahrtrichtung. Die Ansteuerschaltung für die Blinkleuchten der anderen Fahrtrichtung ist identisch zu der dargestellten Schaltungsanordnung. Die Schaltung weist einen Blinktaktgeber 10 auf, der im dargestellten Beispiel die vordere Blinkleuchte des Zugfahrzeuges L1 sowie eine Kontrolleuchte LK am Armaturenbrett des Fahrzeuges direkt ansteuert. Die hintere Lampe des Zugfahrzeuges L2 wird in der dargestellten Ruhestellung eines Schalters S2, der von einem Relais RE2 beaufschlagt wird, ebenfalls direkt vom Blinktaktgeber 10 angesteuert. Der Blinktaktgeber 10 steuert außerdem zwei hochohmige Treiberstufen T1, R1, R3 und T2, R2, R4 an, die ihn nicht belasten und in deren Strompfaden jeweils ein Relais RE1 und RE2 angeordnet ist. Bei korrekt elektrisch angeschlossenem Anhänger erhalten die Treiberstufen T1, R1, R3 und T2, R2, R4 über eine Kurzschlußbrücke 11 im Anhängerstecker eine Verbindung zur Masse. Liegt nun am Ausgang 14 des Blinktaktgebers 10 ein hoher Spannungspegel, so leiten die beiden Transistoren T1 und T2, und die Relais RE2 und RE1 ziehen an. Hierdurch werden die Schalter S2 und S1 betätigt. Der Schalter S2 wird geöffnet, wodurch die direkte Verbindung zwischen Blinktaktgeber 10 und hinterer Zugfahrzeugblinkleuchte L2 unterbrochen wird. Der Schalter S1 hingegen schließt, wodurch die Anhängerblinkleuchte LA mit der Batteriespannung B+ versorgt wird. Im Strompfad zur Anhängerblinkleuchte LA ist dabei ein Reed-Kontakt 12 angeordnet, der den Stromfluß durch die Anhängerblinkleuchte LA überwacht. Bei geschlossenem Schalter S1 schließt auch der Reed-Kontakt 12, und ein drittes Relais RE3 zieht an. Die hintere Fahrzeugblinkleuchte L2 wird dann über einen in Betriebsstellung gebrachten Umschalter S3 direkt mit dem Blinktaktgeber 10 verbunden. Einen Ausfall einer der Zugfahrzeugblinkleuchten L1 und L2 kann der Blinktaktgeber daher direkt durch einen Lastabfall an seinem Ausgang erkennen. Fällt hingegen die Anhängerblinkleuchte LA aus, so öffnet der Reed-Kontakt 12, und es kommt zu einem Abfallen des dritten Relais RE3, wodurch der Schalter S3 in seine Ruhestellung gelangt. Hierdurch wird nun die Rückleuchte des Zugfahrzeuges L2 über ein Zeitglied 13 mit dem Blinktaktgeber verbunden, d. h. sie wird zeitverzögert zur vorderen Blinkleuchte L1 zugeschaltet. Am Ausgang 14 des Blinktaktgebers kommt es hierdurch kurzzeitig zu einem Lastabfall, wodurch ein Fehlersignal erzeugt wird, das eine Ansteuerung der Kontrolleuchte LK mit einer höheren Blinkfrequenz bewirkt. Auch ein Ausfall der Anhängerblinkleuchte LA wird also zuverlässig angezeigt. Die Rückleuchte L2 des Zugfahrzeuges wird hierdurch nicht stillgesetzt sondern lediglich zeitverzögert zur vorderen Blinkleuchte L1 zugeschaltet. Die notwendige Betriebssicherheit des Zugfahrzeuges ist also gewährleistet.

Ist der Anhänger nicht angekoppelt, so ist die Kurzschlußbrücke 11 im Anhängerstecker geöffnet. Die Treiberschaltungen T1, R1, R3 und T2, R2, R4 verlieren somit ihren Masseanschluß und werden damit außer Betrieb gesetzt. Die beiden Zugfahrzeugblinkleuchten L1 und L2 werden dann direkt vom Blinktaktgeber 10 angesteuert.

Die dargestellte Schaltung kommt ohne logische Verknüpfungen von Signalen einzelner Schalteinrichtungen aus. Sie ist daher im Aufbau einfach und preiswert. Ein nachträgliches Einfügen der Schaltvorrichtungen in die Blinklichtanlage eines Fahrzeuges ist also problemlos möglich. Selbstverständlich kann ein Fahrzeug auch bereits ab Werk mit einer erfindungsgemäßen Schaltungsanordnung ausgerüstet werden. Dabei ist der Schaltungsaufbau nicht auf das in der Figur gezeigte Beispiel beschränkt.

## Patentansprüche

1. Schaltungsanordnung zur Verbindung der Blinklichtanlage eines Fahrzeuganhängers mit der Blinklichtanlage eines Zugfahrzeuges, wobei die Blinklichtanlage des Zugfahrzeuges einen Blinktaktgeber (10) aufweist, der den Ausfall einer Blinkleuchte des Zugfahrzeuges (L1, L2) erkennt und anzeigt, und wobei die Schaltungsanordnung die Blinkleuchten des Anhängers (LA) über hochohmige Treiberschaltungen (T1, R1, R3) mit dem Blinktaktgeber (10) des Zugfahrzeuges verbindet und einen Ausfall einer der Blinkleuchten des Anhängers (LA) erkennt und anzeigt, dadurch gekennzeichnet, daß sie Schalteinrichtungen (RE3, S3) aufweist, die bei Ausfall einer der Anhängerblinkleuchten (LA) eine der Zugfahrzeugblinkleuchten (L2) Zeitverzögert zu der oder den anderen Zugfahrzeugblinkleuchten (L1) in der gleichen Fahrtrichtung zuschaltet.

2. Schaltungsanordnung nach Anspruch 1, dadurch gekennzeichnet, daß sie eine Anhängererkennungseinrichtung (11) aufweist.

3. Schaltungsanordnung nach Anspruch 2, dadurch gekennzeichnet, daß die Anhängererkennungseinrichtung in einer Masseverbindung der Schaltungsanordnung über eine vorgeschriebene Kurzschlußbrücke (11) zwischen zwei Polen des Anhängersteckers besteht.

4. Schaltungsanordnung nach einem der Ansprüche 1 bis 3, dadurch gekennzeichnet, daß sie eine Fehlererkennungseinrichtung (12) aufweist, die den Stromfluß durch die Blinkleuchten des Anhängers (LA) überwacht.

5. Schaltungsanordnung nach einem der Ansprüche 1 bis 4, dadurch gekennzeichnet, daß sie für jede Fahrtrichtung ein Relais (RE2) mit einem Schalter (S2) aufweist, der bei nicht elektrisch angeschlossenem Anhänger die zeitverzögert zuschaltbare Zugfahrzeugblinkleuchte (L2) direkt mit dem Blinktaktgeber (10) verbindet.

6. Schaltungsanordnung nach einem der Ansprüche 1 bis 5, dadurch gekennzeichnet, daß sie je Farbeinrichtung ein Relais (RE1) mit einem Schalter (S1) aufweist, der in seiner Betriebsstellung die Anhängerblinkleuchte (LA) mit der Batteriespannung (B+) verbindet.

7. Schaltungsanordnung nach einem der Ansprüche 1 bis 6, dadurch gekennzeichnet, daß sie je Fahrtrichtung ein Relais (RE3) mit einem Umschalter (S3) aufweist, der den Blinktaktgeber (10) in seiner Ruhestellung über ein Zeitglied (13) und in seiner Betriebsstellung direkt mit der zeitverzögert zuschaltbaren Zugfahrzeugblinkleuchte (L2) verbindet, wobei das Relais (RE3) von der Fehlererkennungseinrichtung (12) für die Anhängerblinkleuchten (LA) angesteuert wird.

8. Schaltungsanordnung nach einem der Ansprüche 1 bis 7, dadurch gekennzeichnet, daß der Blinktaktgeber (10) zusätzlich eine Kontrolleuchte (LK) am Armaturenbrett des Zugfahrzeuges ansteuert.

9. Schaltungsanordnung nach Anspruch 8, dadurch gekennzeichnet, daß der Blinktaktgeber (10) mindestens die Kontrollleuchte (10) bei Ausfall einer der Blinkleuchten (L1, L2, LA) des Wagenzuges mit einer veränderten Taktfrequenz ansteuert.
